(19)

Europäisches
Patentamt
European
Patent Office
Office européen
des brevets

(11) **EP 3 789 104 A1**

(12) **EUROPEAN PATENT APPLICATION**

(43) Date of publication:
**10.03.2021 Bulletin 2021/10**

(21) Application number: **19382783.9**

(22) Date of filing: **09.09.2019**

(51) Int Cl.:
***B01D 61/22*** (2006.01)  ***B01D 65/02*** (2006.01)
***B01D 65/10*** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **SUEZ Groupe**
**92040 Paris la Défense Cedex (FR)**

(72) Inventors:
• **Arnaldos Orts, Marina**
 **08940 CORNELLÀ DE LLOBREGAT (ES)**
• **Joseph Duran, Bernat**
 **08360 CANET DE MAR (ES)**
• **Echevarría Díez-Canedo, Carlos**
 **08006 BARCELONA (ES)**

(74) Representative: **ZBM Patents - Zea, Barlocci &
Markvardsen**
**Rambla Catalunya, 123**
**08008 Barcelona (ES)**

(54) **METHOD AND SYSTEM FOR FILTRATION OF A LIQUID**

(57) A method and a filtration system for filtration of a liquid by a filtration system is disclosed. The filtration system is configured with filtration parameters, the filtration parameters comprising at least a filtration time and a filtration flux of the liquid through the filtration system. The method comprises: determining fouling indicators from the filtration system, comparing a set of fouling indicators with corresponding setpoints; performing an action on the filtration system based on a result from the comparison, and establishing the setpoints based on a received operational mode, whereby the operational mode is one of expanding the lifecycle of the filtration system or maximizing a total volume of the filtered liquid.

EP 3 789 104 A1

**Description**

**Background**

This specification relates to a membrane water treatment system or process, for example for the treatment of water in a system using immersed membranes. In particular, approaches to alleviate the effects of fouling of membranes are disclosed.

Membrane technologies, for example ultrafiltration, UF or micro filtration, MF, are complex to operate and plant managers and operators may dispose of a monitoring system in order to follow key parameters and make operational decisions. Membrane fouling is one of the constraints when membrane filtration technologies are applied. SCADA systems allow a passive monitoring of key parameters, with the possibility to download generated data and analyse how transmembrane pressure, TMP, permeability, flux or other indicators evolve in time, in order to make decisions. Such systems allow therefore taking corrective decisions which may impact the operational resources. Some strategies comprise applying fixed set-point filtration cycles which may be adjusted after a non-desired behaviour of the water treatment system.

**Brief Description of the Drawings**

FIG. 1 is a representation of an example of a filtration system.
FIG. 2 is a representation of an example of a method according to the present disclosure.
FIG. 3 is a representation of an example of a method according to the present disclosure.
FIG. 4 is a representation of an example of a method according to the present disclosure.
Fig 5 is a representation of an example of a method according to the present disclosure.

**Detailed Description**

This disclosure relates to a method and a system for a liquid filtration where the system may respond and adapt to varying operational needs. In a filtration system, a pre-establishment of a filtration flux or the development of periodical hydraulic cleanings and/or chemical cleanings may be some of the strategies to achieve a sustainable operation, in terms of fouling and costs of membranes. A maximum production may be desired in a different situation where an event occurs, such as sudden increase of contamination of the liquid to be filtered.

An example method according to the present disclosure comprises a method for filtration of a liquid by a filtration system. The liquid may be wastewater or drinking water. The filtration system may be an ultrafiltration, UF, membrane system, a sand filtration, SF, system, microfiltration, membrane filtration system, MF, or filtration though any type of media.

Example methods of the present disclosure may comprise a filtration system which is configured with filtration parameters. The filtration parameters comprise at least a filtration time and a filtration flux of the liquid which is passed through the filtration system. The filtration time or filtration cycle may vary depending on the filtration system employed. In an ultrafiltration membrane system, UF, a filtration cycle may be comprised between 30 and 120 minutes. In a sand filtration system, depending on the filtration rate of the system the filtration cycle may be comprised in the range of 30 minutes to several hours. In some examples, the filtration parameters may comprise a chemical cycle, whereby the chemical cycle may be defined as the time between chemical cleanings and which may be set to 1 day, or 3 days or 5 days or 10 days. In some examples, one chemical cycle is composed of a determined number of hydraulic cycles.

Example methods of the present disclosure may comprise determining, for example by on-line or offline measuring, or by receiving, fouling indicators from the filtration system. Online measurement may allow a direct control, for example in a real-time fashion, of the filtration system depending on some parameters of the filtration system or from the liquid to be filtered, or from the filtered liquid, whereas off-line measurement may allow the configuration of filtration systems to be installed, or the analysis of a filtration system in a non-real-time fashion. In some examples, determining the fouling indicators comprises the on-line measuring fouling indicators performed during a hydraulic cleaning of the filtration system.

In some cases, fouling is quantified by the change in transmembrane pressure, TMP, during filtration or permeation. Fouling is often expressed using resistance, R, which is calculated according to

$$R = \frac{TMP}{J * \mu}$$

where, R is resistance ($m^{-1}$)
TMP is the transmembrane pressure (Pa)
J is the permeate or filtered liquid flux ($m^3\ m^{-2}\ s^{-1}$)
$\mu$ is the viscosity of water (Pa $s^{-1}$).

Fouling may be reversible or irreversible and may be further classified as hydraulically or chemically reversible and irreversible. Hydraulically reversible fouling may be removed by physical or mechanical cleaning methods such as backwashing and air sparging. Membrane fouling is often modeled using a resistance-in-series model, which defines the total membrane resistance, $R_T$, as the sum of intrinsic membrane resistance, Rm, and resistance due to fouling, both reversible, Rrev, and irreversible, Rirr, whereby $R_T=$ Rm + Rrev+ Rirr.

Fouling control strategies may comprise mechanical cleaning, also called hydraulic backwash, and chemical cleaning. In hydraulic backwash or mechanical cleaning, the flow of a liquid is reversed to remove foulants that may have deposited onto the surface of a membrane. The fouling removed by mechanical cleaning may be called hydraulically reversible fouling. Backwash frequency, flux or pressure, and duration or backwash fouling cycle can be adjusted to maximize efficiency. Backwashing may not fully restore permeability; the fouling not removed by mechanical cleaning may be called hydraulically irreversible fouling and is usually supplemented with other physical and/or chemical cleaning methods. Chemical cleaning may comprise chemically enhanced backwash, CEB, and clean in place, CIP. CEB may be performed daily with oxidants such as sodium hypochlorite. CIP may be performed about 10 times per year and often exposes the membrane to a variety of chemicals for intensive cleaning.

Example methods of the present disclosure may comprise determining or measuring fouling indicators such as a total fouling index, TFI, and/or a hydraulically irreversible fouling index, HIFI, and/or a variation of resistance between filtration cycles or during mechanical cleaning, and/or a variation of transmembrane pressure, TMP, and/or a variation of the inverse of permeability, and/or a variation of permeability.

Example methods of the present disclosure may comprise determining or receiving or measuring fouling indicators such as an extrapolation in time of at least one of: a total fouling index, TFI, and/or a hydraulically irreversible fouling index, HIFI, and/or a variation of resistance between filtration cycles or during mechanical cleaning, and/or a variation of transmembrane pressure, TMP, and/or a variation of the inverse of permeability, and/or a variation of permeability. In some examples, the fouling indicators comprise a fouling velocity of a membrane. In some examples, the fouling indicators comprise a time to reach a setpoint, whereby the time to reach a setpoint is the time from the moment in which at least a parameter, such as the permeability or the inverse of the permeability, is measured up to the moment where such parameter is assumed or forecasted to reach a setpoint; such setpoint may be, in some examples, a minimum acceptable permeability MAP, or the inverse of MAP, or a Minimum Permeability to Launch Chemical Cleaning, MPLCC or the inverse of MPLCC.

In preferred examples of the present disclosure, the fouling indicators are measured during mechanical cleaning or hydraulic backwash.

Example methods of the present disclosure may comprise performing a comparison, or comparing, at least a fouling indicator or a set of fouling indicators with at least a corresponding setpoint or with corresponding setpoints. The setpoints may comprise values or acceptable values of resistance which a fouled filtration system may oppose. In examples of the present disclosure, the setpoints comprise a predetermined value for permeability, such as a minimum acceptable permeability, MAP, or an inverse of MAP, or a Minimum Permeability to Launch Chemical Cleaning, MPLCC, or an inverse of MPLCC.

Example methods of the present disclosure may comprise performing an action on the filtration system and /or on the filtration parameters based on a result from the comparison. In example methods of the present disclosure, an action is performed if the fouling indicator reaches or overcomes or is below a setpoint. In example methods of the present disclosure, an action is performed if the fouling indicator is between two setpoints.

In some examples of the present disclosure, the action may comprise modifying the filtration time, for example by increasing the filtration time, and/or reducing the filtration time, and/or modifying the filtration flux, for example by increasing the filtration flux, and/or reducing the filtration flux, and/or maintaining filtration parameters. For example, a filtration flux may be 35 LMH, a measured permeability may be 100 LMH/bar and a permeability setpoint maybe 80 LMH/bar; then an action may be performed since the measured permeability is higher that the setpoint. The action performed may be to increase the filtration flux up to 40 LMH, since the configuration of the filtration system may allow performing at a higher filtration flux until the setpoint is reached, thereby increasing production.

In other examples of the present disclosure, if the filtration cycle is set to 60 minutes, and a time to reach minimum acceptable permeability based on irreversible fouling index or based on an increase or decrease rate of the irreversible fouling index, also called irreversible fouling slope, is less than a predetermined set point, for example less than 1 day, then the filtration cycle may be reduced to 45 minutes, since an operational mode may comprise enlarging membrane lifespan, and therefore a more sustainable filtration cycle may be 45 minutes.

If, however, the operational mode is set to maximizing production, or in other words, increasing the volume of a filtered liquid, then the filtration cycle may be increased to 80 minutes until a time to reach minimum acceptable permeability, MAP, setpoint is 15 minutes, since the priority is to produce more filtered liquid independently of the conditions or the wear of the filtration system.

Example methods of the present disclosure may comprise establishing the setpoints based on a received operational mode, whereby the operational mode is one of expanding the lifecycle of the filtration system or maximizing a total volume of the filtered liquid. An operational mode may be received by the example methods of the present disclosure. In examples of the present disclosure an operational mode may be received from user interface, whereby the method comprises modifying the operational mode depending on the received operational mode from the user interface. In examples, an operational mode may be received from a controlling system whereby the method comprises detecting, by the controlling system, a need to modify production. In examples, an operational mode may be received from a provisioning system whereby the method comprises detecting, by the provisioning system, a need to modify a demand for filtration elements. A provisioning system may comprise a system which is configured to determine that a stock of membranes is or is not prepared to respond to an increasing demand of membranes. In an example, a sustainable operational mode, which may be understood as a mode enlarging the lifecycle of a filtration system, may be received from a provisioning system detecting a need for stopping the demand of replacing filtration elements, for example filtration membranes. In other examples where a sustainable operation mode is already operating, a controlling system remote or local to the filtration system may detect that the demand of filtered liquid or water is not achieved: in this situation the controlling system may send a "maximize production" operational mode since the sustainable mode already operating does not suffice for responding to the demand. In other examples, an operational mode may be received from a user interface wherefrom a user may select an operational mode depending on the exploitation needs.

In some examples, the setpoints may comprise resistance and may be set as follows:

for a sustainable operational mode, the setpoints are set to a value of $3E+12m^{-1}$;
for a maximize production operational mode, the setpoints may be set to a value of $2E+12m^{-1}$.

Such setpoints are selected such that enlarging the lifecycle of the filtration system may encompass admitting a more fouled system ($3E12m^{-1}$) than a maximize production mode admitting lower values of resistance ($2E12m^{-1}$) in order to obtain a maximum value of filtered liquid volume.

In some examples, the fouling indicators may comprise a time for TFI to reach a limit. In such examples, TFI is used to create a regression line and extrapolate the regression line up to an inverse of permeability value, since TFI is calculated with the inverse of permeability. Thus, TFI may be extrapolated to the inverse of the minimum acceptable permeability. In such examples, the limit or setpoint comprises the inverse of the minimum acceptable permeability, MAP; for example:

- for a sustainable operational mode, or enlarging the lifecycle of the filtration system, a fouling indicator maybe 80 minutes to reach a MAP setpoint of 90LMH/bar;
- for a maximize production mode, a fouling indicator maybe 80 minutes to reach a MAP setpoint of 60 LMH/bar.

Such setpoints are selected such that, whereas a sustainable operational mode, or enlarging the lifecycle of the filtration system may encompass not admitting that in less than 80 minutes a MAP of 90 LMH/bar is reached, a maximize production mode may admit that the filtration system gets a lower MAP setpoint limit in the same amount of time even though such action may mean wearing the filtration system more than in the previous scenario, in order to obtain a maximum value of filtered liquid volume. In other words, if the objective is to Maximize Production, and MAP is the Minimum acceptable permeability, the MAP to reach may be lower than MAP to operate in a sustainable fashion. For example, in ultrafiltration UF, a possible strategy to enlarge membrane lifetime is to avoid reaching very low permeabilities (usually a limit recommended by the manufacturer); in some operations however, a membrane is "forced" if the objective is to maximize production, in order to respond a certain demand.

Example methods of the present disclosure may comprise performing an action on the filtration system further based on a forecasted energy consumption for each action. In some examples, an energy consumption supervision system which may be local or remote to the filtration system may send an activation command for an energy savings mode in which the action performed based on the fouling indicators is selected from a list of possible actions and the selected one is the action consuming less energy. For example, if a high fouling state is determined where the fouling indicators compared to the setpoints show a high fouling rate, then either action of reducing on a 5% the filtration time or reducing on a 5% the filtration flux may alleviate the fouling speed of the filtration system. The filtration system may be configured by default to always perform the reduction of filtration flux, but, in the case where an energy savings mode is activated by an internal or external controlling system to the filtration system, the action selected will be the action consuming less energy. In some examples of the present disclosure the energy consumption is measured by determining:

Energy consumption [kWh/m$^3$]

$$\frac{\int Q \cdot P \; dt}{Volume \; produced}$$

Instantaneous Power (W)= $W \; [kW] = \; TMP \; (t) \cdot V(t)$

Where TMP may be provided by SCADA and V(t) is the volume produced in a time duration $\Delta$t.

Instantaneous Energy consumption (W') = $W'[kwh] = W(t) \cdot \Delta t$

Specific Energy consumption (EC)

$$EC \left[\frac{kWh}{m^3}\right] = \frac{\sum_{to}^{t} W'(t)}{WY \cdot \sum_{to}^{t} V(t)}$$

In some examples, an Energy Costs, EC', may be evaluated as follows:

$$EC'[€/m^3] = EC \cdot E_T$$

whereby $E_T$ is the energy tariff applied, provided by a user or by a remote or local pricing system.

In some examples, the energy consumption is measured during a filtration cycle or production cycle.

In some examples when a chemical cleaning is performed, a Chemicals cost, CC, may be evaluated for the chemical cleanings:

$$CC \left[\frac{€}{m^3}\right] = \frac{V_{CIP} \sum_{0}^{i} \cdot C_c^i \cdot C_T^i}{WY \cdot \sum_{to}^{t} V(t)}$$

Where $V_{CIP}$ is the volume of chemical solution transferred to a filtration system, $C_C$ is the chemical dosage concentration [kg/m$^3$] in a chemical cycle (i) and $C_T$ is a chemical cost [€/kg].

Such chemical cost calculations may allow to vary some parameters such as the chemical cycle of the filtration system.

In some examples, the setpoints comprise a minimum acceptable permeability, MAP, and/or a minimum permeability to launch chemical cleaning, MPLCC.

In some examples, the fouling indicators comprise at least one of a total fouling index, TFI, and/or a hydraulically irreversible fouling index, HIFI, and/or a variation of resistance between filtration cycles or during mechanical cleaning, and/or a variation of transmembrane pressure, TMP, and/or a variation of the inverse of permeability, and/or a variation of permeability, and/or a time to reach a setpoint.

In some examples, a fouling indicator comprises an extrapolation in time of at least one of: a total fouling index, TFI, and/or a hydraulically irreversible fouling index, HIFI, and/or a variation of resistance between filtration cycles or during mechanical cleaning, and/or a variation of transmembrane pressure, TMP, and/or a variation of the inverse of permeability, and/or a variation of permeability.

In some examples, the fouling indicators comprise a time for the filtration system to reach any one of MAP or MPLCC.

In some examples, measuring the fouling indicators is performed during a backwash or hydraulic cleaning of the filtration system. In such examples, the state of the filtration system, for example, filtration or production, or hydraulic/mechanical cleaning or backwash or air scouring, or chemical cleaning states, may be read from a SCADA connected to a controller of the filtration system. Advantageously, no calculations need to be performed in the filtration system in order to detect the state of the same. In other examples, the state of the filtration system may be detected or evaluated by measuring whether certain conditions are complied with; for example, valid permeation cycle conditions may be measured in order to detect that a permeation or filtration state is activated in the filtration system so that, only then, some fouling parameters may be evaluated.

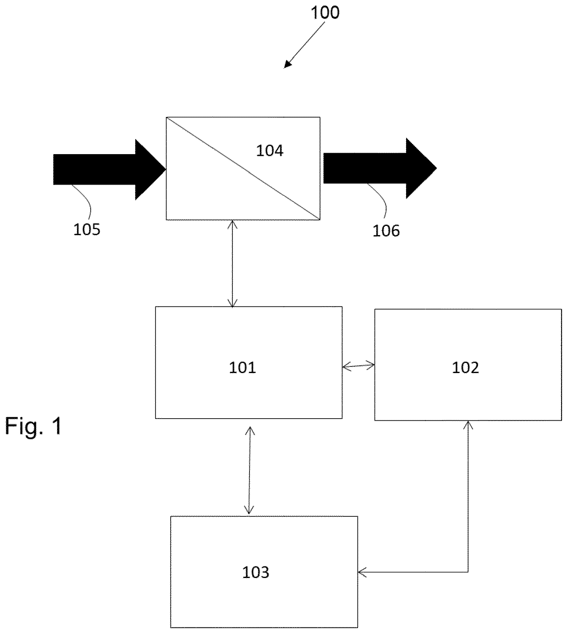

Figure 1 shows a filtration system (100) according to some examples of the present disclosure. Figure 1 shows an interface (101) or display for communication with a processor (102), an interface for receiving an operational mode (103) and means for carrying out the example methods of the present disclosure. In particular, the system of figure 1 is an optimized membrane ultrafiltration system (104) comprising one or more membranes. The example methods of the present disclosure may be implemented by or in any type of ultrafiltration, UF, and microfiltration, MF, membranes, and may be applied to any available configuration: immersed or external pressurized modules. The method may also be implemented by other filtration systems such as sand filters, SF.

In some examples, the filtration system (100) comprises the processor (102). In some examples, the means for carrying out the example methods of the present disclosure are comprised in the processor (102). In the example of figure 1, the interface for receiving an operational mode (103) may comprise a user interface such as a screen.

The processor may comprise a computer-readable medium storing executable instructions that, when executed, cause the processor (102) to operate a method according to the present disclosure.

By the operation of a method according to the present disclosure, some indicators may be determined, which may serve for further calculations. The determination of parameters may comprise measuring by the processor (102), for one or more membranes, at least:

- a feed flow (105) and/or permeate flow (106); a flow meter may be located on a permeate line for submerged UF membranes or in a feed line in external pressurized UF membranes;
- the transmembrane pressure, TMP; a pressure transmitter may be located on a feed side of the membrane and on the permeate line to measure a pressure gradient across the membrane;
- the temperature of the water flowing through the membrane; a temperature transmitter may be located in a feed tank not shown in figure 1. The temperature of the water flowing through the membrane may be used to normalize flux and permeability;
- the status or state of the operation of the membranes amongst at least:

  - filtration or production, or
  - backwashing or hydraulic cleaning or mechanical cleaning, which, depending on the membrane configuration -submerged or pressurized- may be based on Backwash, Forward Flush or Air Scouring;
  - maintenance cleaning, which may be a frequent chemical cleaning to control irreversible fouling and restore permeability;
  - recovery cleaning also named Intensive Chemical cleaning which may be applied less frequently but more intensively or at higher doses of chemicals to recover permeability;
  - out of production.

The status or state may be acquired by a SCADA and received by a processor (102) performing example methods of the present disclosure.

If the status of the operation is filtration or production, then TMP, permeate flow, flux and permeability may be normalized with temperature since, at lower temperatures, the viscosity is higher, and more pressure is needed to push water through the membrane. This operation allows interpreting how the membrane is fouled independently of the temperature or season. In some examples, these variables are normalized as follows:

Viscosity normalization:

$$\mu = \sum_{i=1}^{4} a_i \cdot (T)^{b_i}$$

$$= 280.68 \cdot (T)^{-1.9} + 511.45 \cdot (T)^{-7.7} + 61..131 \cdot (T)^{-19.6} + 0.45903 \cdot (T)^{-40}$$

Normalized permeate flow:

$$Q_{p,25} = \frac{\mu(T)}{\mu(25)} \cdot Q_p$$

$$\mathrm{TMP}_{25} = \frac{\mu(T)}{\mu(25)} \cdot \mathrm{TMP}$$

Where:

$Q_p$ is the measured permeate flow
$Q_{p,25}$ is the normalized permeate flow at 25 °C.
TMP is the measured transmembrane pressure
$\mathrm{TMP}_{25}$ is the normalized TMP at 25 °C.
$\mu(T)$ is the calculated viscosity at measured water temperature
Normalized permeate flux (J):

$$J_{25} = \frac{Q_{p,25}}{A} \cdot 1000 \frac{Q_{p,25}}{\mathrm{m}^2 \text{ membrane}} \cdot 1000$$

Where A is the Membrane Area [m2 membrane], input provided by the user regarding the UF train capacity.
Normalized permeability ($K_{25}$):

$$K_{25} = \frac{J_{25}}{\mathrm{TMP}} \cdot 1000$$

Where TMP, as transmembrane pressure in 'bar' may be directly provided by SCADA.
K' calculation:

$$K'(t) = \frac{K_{(t)}}{K_o}$$

Where K(t) is the permeability measured and Ko is the initial or baseline permeability considered.

If the status is backwashing, then fouling indicators may be measured, such as Reversible Fouling Indicator - TFI or Total Fouling Indicator. TFI may be calculated as: d(1/K')/dt along a filtration cycle or time, corresponding to one hydraulic cycle duration, where K' is the normalized permeability. The information obtained by the TFI is the "slope" of the regression line calculated from the inverse of the permeability monitored along a hydraulic cycle, which refers to the "total fouling velocity" of the membrane.
In backwashing status, other parameters may be calculated, such as a Water Yield, WY or a Production Rate, PR:
Water Yield, WY, which represents to the % of volume produced per total volume filtered. WY can be calculated as:

WY1: Net volume produced along 1 hydraulic cycle, divided by the total volume filtered.

$$WY_1\ [\%] = \frac{(\Delta t \cdot \sum_{k=0}^{t} Q(k)) - V_{HC}}{(\Delta t \cdot \sum_{k=0}^{t} Q(k)) + V'_{HC}}$$

where $V_{HC}$ is the permeate volume used during the Backwash and $V'_{HC}$ is the excess inlet volume used for tank filling and emptying in a hydraulic cleaning. These volumes may be constants/set points introduced by a user.
WY2: Net volume produced along 1 chemical cycle, divided by the total volume filtered.

$$WY_2\ [\%] = \frac{(\Delta t \cdot \sum_{k=0}^{t} Q(k)) - V_{HC} - V_{MC}}{(\Delta t \cdot \sum_{k=0}^{t} Q(k)) + V'_{HC} + V'_{MC}}$$

where $V_{MC}$ is the permeate volume used in the CIP tank (Cleaning In Place Tank) and $V'_{MC}$ is the excess inlet volume used for tank filling and emptying in a MC. These volumes are constants/set points introduced by the user.
WY3: Net volume produced along 1 intensive chemical cycle (recovery cleaning (RC)), divided by the total volume filtered.

$$WY_3\ [\%] = \frac{(\Delta t \cdot \sum_{k=0}^{t} Q(k)) - V_{HC} - V_{MC} - V_{RC}}{(\Delta t \cdot \sum_{k=0}^{t} Q(k)) + V'_{HC} + V'_{MC} + V'_{RC}}$$

where $V_{RC}$ is the permeate volume used in the CIP tank (Cleaning In Place Tank) and $V'_{RC}$ is the excess inlet volume used for tank filling and emptying in a RC. These volumes are constants/set points introduced by the user.

In backwashing status, Production Rate, PR, which refers to the % of time dedicated to production regarding to total time of operation, may be calculated:

$$PR_1\ [\%] = \frac{Production\ time}{Production\ time + HC\ time}$$

$$PR_2\ [\%] = \frac{Production\ time}{Production\ time + HC\ time + MC\ time}$$

$$PR_3\ [\%] = \frac{Production\ time}{Production\ time + HC\ time + MC\ time + RC\ time}$$

If the status is maintenance or recovery chemical cleaning, a further fouling indicator may be measured, such as the Irreversible Fouling Indicator, HIFI. HIFI may be calculated as: d(1/K')/dt along one chemical cycle, where a chemical cycle is composed of several hydraulic cycles, and where K' is the normalized permeability. The information provided by HIFI is the "slope" of the regression line calculated from the inverse of the permeability monitored along a chemical cycle, which refers to the "irreversible fouling velocity" on the membrane.

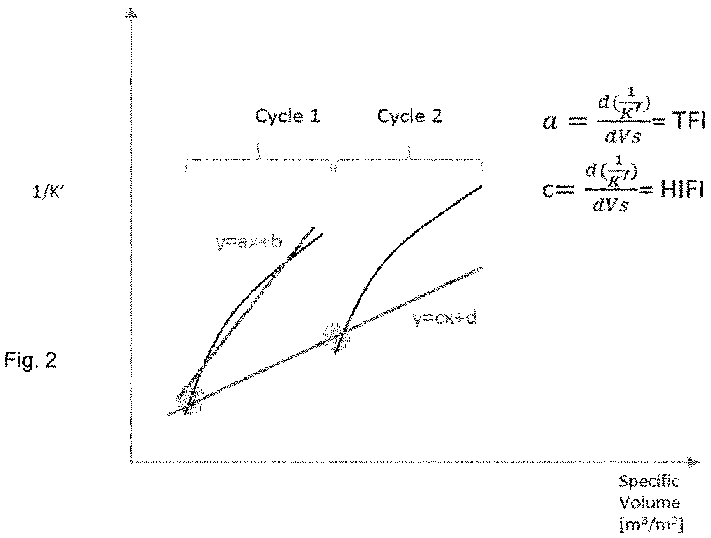

Figure 2 shows an example of HIFI and TFI graphical representations. In figure 2, the inverse of the normalized permeability curve of a membrane versus the specific volume filtered [m3/m2] is represented in two consecutive cycles, cycle 1 and cycle 2. For each impermeability curve a linear regression is represented, "y", whereby a first linear regression is represented as y=ax+b, where "a" is the slope of the first linear regression representing the TFI as d(1/K')/dVs and b is an initial 1/K'(t) value of the hydraulic cycle. Note that "t "and "Vs" are related by the equation Qs=Vs/t. A second linear regression of a second curve is represented as y=cx+d, where "c" is the slope of the second linear regression representing the HIFI and "d" is an initial 1/K'(t) value of the hydraulic cycle. The second curve is the line linking the points where impermeability has become irreversible, or in other words, where mechanical cleaning or hydraulic backwash is not able to eliminate fouling of the membrane. In this theoretical example, shown for the illustrative purpose of showing how the equations are calculated in a visual way, a chemical cleaning follows two consecutives hydraulic cycles, cycle 1 and cycle 2. In a real filtration system, a chemical cleaning may usually be performed per day, and therefore, every 24 hydraulic cycles of 1 hour.

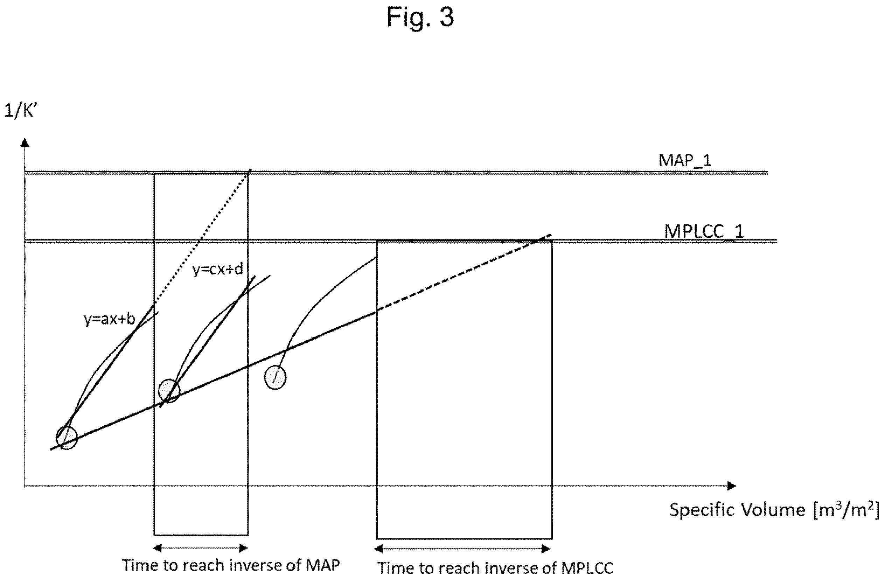

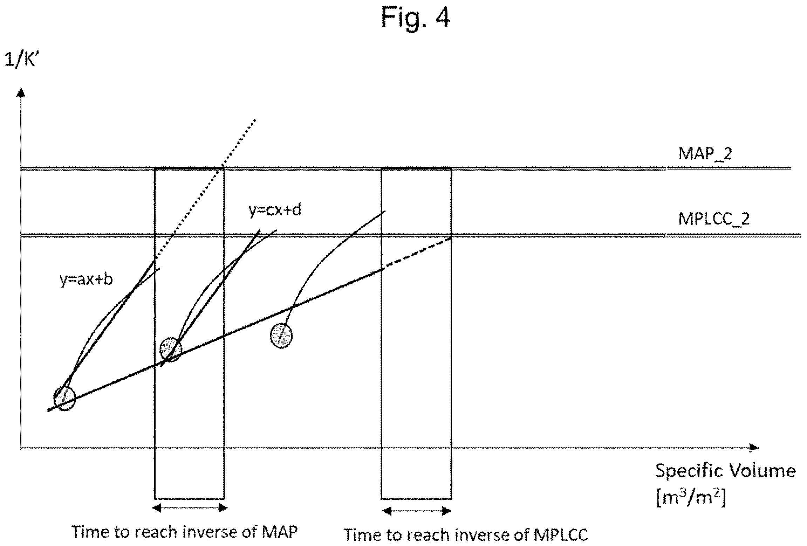

Figures 3 and 4 show, respectively, further representations of TFI and HIFI during 3 hydraulic cycles.

The combination of both indicators TFI and HIFI gives information on which hydraulic cleaning strategy: either increase or decrease hydraulic cleanings frequency may be activated and a prediction of when the next maintenance or recovery cleaning may be done.

Depending on a received operational mode: maximize production or sustainable operation of the membranes, upper limits to the TFI and HIFI may be established respectively:

- Minimum Acceptable Permeability, MAP, and
- Minimum Permeability to Launch Chemical Cleaning, MPLCC.

For example, for Maximize production operational mode, a MAP may be set to 60 [LMH/bar] and a MPLCC may be set to 100 [LMH/bar]. For example, in sustainable operational mode, a MAP may be set to 90 [LMH/bar] and a MPLCC may be set to 120 [LMH/bar]. These values may be selected as references on which an operator of a filtration system, or algorithms implementing the methods of the present disclosure may count. These values may be varied. MAP and MPLCC are usually set points which may be fixed by a user or defined by an artificial intelligence, AI, system, and they may vary depending on a received operational mode. Such values define the action to be performed by the filtration system.

In the examples shown in the figures, two values for MAP and MPLCC are proposed.

A "Maximize production" operational mode may be referred to an extreme and non-conservative operational mode, and the membrane may therefore be forced and consider "acceptable" lower permeability levels than in alternative operational modes. The driver or objective in such operational mode is to fulfill water demand by improving production, despite possible negative effects in terms of lifespan derived from "forcing" the membrane.

A "Sustainable Operation" operational mode may be referred to operate a filtration system in a conservative way. In order to enlarge lifespan of the membranes and keep the filtration system in sustainable operating conditions, it may be necessary to not reach low permeability levels, and therefore, the drive may be to avoid reaching a certain "non-conservative" permeability value.

Provided that TFI is calculated as the inverse of permeability, based on a lineal regression of both TFI and HIFI, an extrapolation of TFI to the inverse of MAP and an extrapolation of HIFI to the inverse of MPLCC may be performed and the "time to reach the inverse of MAP/MPLCC" may be forecasted. Different levels of fouling may be defined, for example, "high fouling and low fouling", or "high fouling, acceptable fouling and low fouling". In some examples, a high fouling or high fouling rate may be considered when the inverse of permeability is forecasted to reach the associated inverse of MAP setpoint in less than 80 minutes; in other words, when the extrapolation of TFI is forecasted to reach the MAP limit (or the inverse of MAP) in less than 80 minutes, the system is considered to present a high fouling rate. In some examples, a high fouling or high fouling rate may be considered when an irreversible inverse of permeability is forecasted to reach an associated inverse of MPLCC setpoint in less than 2 days; in other words, when the extrapolation of HIFI is forecasted to reach the MPLCC or inverse of MPLCC limit in less than 2 days. In some examples, a low fouling or low fouling rate may be considered when the permeability is forecasted to reach a MAP setpoint in more than 160 minutes. In some examples, a low fouling or low fouling rate may be considered when irreversible permeability is forecasted to reach a MPLCC in more than 5 days.

The table below shows some examples of high, acceptable or low fouling rate in a matrix representation:

| Level | Time for TFI to reach inverse of MAP | Time for HIFI to reach inverse of MPLCC |
|---|---|---|
| High fouling rate | Time<80 minutes | Time<2 days |
| Acceptable fouling rate | 80<Time<160 minutes | 2<Time<5 days |
| Low fouling rate | Time>160 minutes | Time>5 days |

Once the setpoint values MAP and MPLCC limits are established, the combination of setpoints provides different example actions which may be performed:

- reduce 5% filtration time or reduce 5% filtration flux if there exist high irreversible fouling, HIFI, and high fouling rate, TFI; in this case, the filtration system or membrane is fouls rapidly and the system needs to decrease the production. This may be considered as a warning state;
- reduce 2% filtration time or reduce 2% filtration flux, if there exist acceptable irreversible fouling HIFI and high fouling rate, TFI, or if there exist acceptable TFI, and high HIFI; in this case the fouling rate of the membrane is medium, and the system may be set to produce at a slower pace; this may be considered as a warning state;

- reduce 1% filtration time or reduce 1% filtration flux, if there exist high TFI and low HIFI or if there exist low TFI, and high HIFI; this may be considered as a warning state;
- maintenance or no action if both TFI and HIFI are acceptable; in this case the system may continue to produce as it is;
- increase 2% filtration time or increase 2% filtration flux if TFI is low and HIFI is acceptable or if TFI is acceptable and HIFI is low; in this case the fouling rate of the membrane is medium, and the system may be set to produce at a higher pace; this may be considered as a state in which the filtration system may further optimize production;
- increase 5% filtration time or increase 5% filtration flux, if both TFI and HIFI are low; in this case the fouling rate of the membrane is very low, and the system may be set to produce at a higher pace, since it may be considered underutilized. This may be considered as a state in which the filtration system may further optimize production.

The filtration flux may be varied by the processor (102) sending electric commands to valves (not shown) of the filtration system.

In a matrix representation, the above actions may be represented as in the table below:

|  | High TFI (Time<80 min) | Acceptable TFI (80<Time<160 min) | Low TFI (Time>160 min) |
|---|---|---|---|
| High HIFI (Time<2 days) | Warning. -5% filtration time / -5% filtration flux | Warning. -2% filtration time/ -2% filtration flux | Warning. -5% filtration time/ -5% filtration flux |
| Acceptable HIFI (2<Time<5 days) | Warning. -2% filtration time / -2% filtration flux | Acceptable. No action performed. | Optimize. +2%filtration time/ +2% filtration flux |
| Low HIFI (Time>5 days) | Warning. -5% filtration time/-5% filtration flux | Optimize. -5% filtration time/ -5% filtration flux | Optimize. -5% filtration time/ -5% filtration flux |

The setpoints may be modified depending on the system needs. For example, an artificial intelligence, AI, system may determine that if the established setpoints oblige to decrease the filtration flux or time more than twice per day, then the setpoints may be recalibrated.

As seen in the example above, the operation mode selection triggers a MAP and MPLCC setpoints definition, which in turn, may trigger the definition and/or modification of values of fouling indicators, such as a time to reach the setpoints.

In the observed example the setpoints are MAP or MPLCC, and the times for the fouling indicators to reach the setpoints are based on extrapolation and dependent on a received operational mode.

In the above example, an energy savings mode may allow to continuously evaluate and compare which action of either modify the filtration flux or modify the filtration time impacts significantly in the energy consumption of the filtration system.

Figures 3 and 4 represent how the setpoints are varied depending on the operational mode. Figures 3 and 4 represent the inverse of permeability, 1/K, inverse of MAP in each figure: MAP_1, MAP_2, and inverse of MPLCC in each figure: MPLCC_1, MPLCC_2. The TFI and HIFI regression lines are shown increasing with time or filtered volume "Specific volume".

As shown, the irreversible fouling after each hydraulic cleaning, or in other words, during a hydraulic cycle, is represented as an "increasing" curve representing an increasing inverse of permeability. Regression lines "y" are obtained for each curve representing the evolution of the inverse of permeability. Regression lines "y" are represented departing from each minimum of irreversible fouling indicator after each hydraulic cleaning. An extrapolation of the lines "y" is represented in dotted lines, which corresponds to forecasted values, in time, of the regression lines "y" or total fouling index, TFI, and/or of the regression of a hydraulically irreversible fouling index, HIFI.

Figure 3 represents the filtration system behavior when the operational mode is set to Maximize Production operational mode. The setpoints may be MAP_1 and MPLCC_1, corresponding to the inverse of first MAP and inverse of first MPLCC. In figure 3, MAP_1 and MPLCC_1 are higher than MAP_2 and MPLCC_2 in figure 4, where a sustainable operation operational mode is set.

Figure 4 represents the filtration system behavior when the operational mode is set to Sustainable operational mode, for which setpoints MAP_2 and MPLCC_2, corresponding to the inverse of second MAP and inverse of second MPLCC, are set. In figure 4, MAP_2 and MPLCC_2 are lower than MAP_1 and MPLCC_1 of figure 3.

As seen in the figures, the time to reach MAP_1, measured from a point in time where XXX up to a time where the regression line TFI is assumed to reach MAP_1, is greater than the time to Reach MAP_2, and the time to reach MPLCC_1 is greater than the time to reach MPLCC_2.

These results show the adaptability of the filtration system, for example, to a sustainable operation of figure 4 wherein, in order to preserve the membrane or filtration system, the methods of the present disclosure perform actions on the filtration parameters (increase or reduce the filtration flux or filtration time) in order not to reach, or before reaching, such low permeabilities, MAP_2 and MPLCC_2, or high 1/K' values. In the shown examples, the fact of not reaching the MAP, or MPLCC may be performed via the variation of the MAP and MPLCC and the establishment of "times to reach" the setpoints, which in some examples has been set to 80 minutes and 160 minutes. Other times to reach the setpoints may be set depending on the plant or user needs.

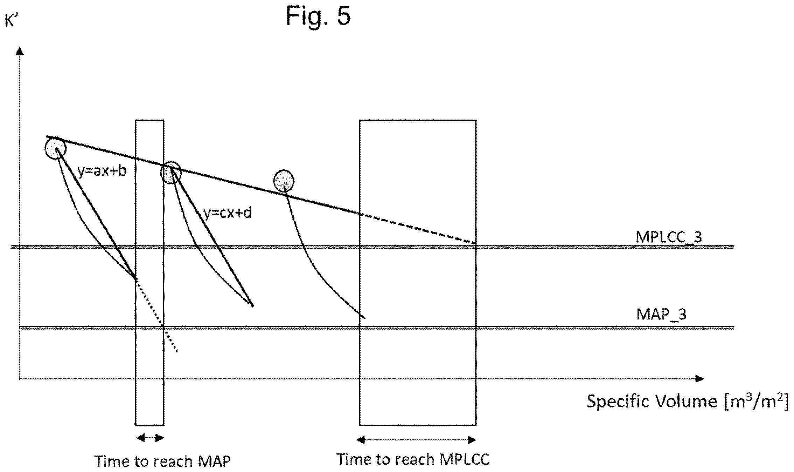

Figure 5 shows an alternative graphical representation where permeability, K, and MAP and MPLCC are represented, instead of their inverses. In this case, the regression of TFI and HIFI decrease over time and TFI is calculated as dK/dt instead of d(1/K)/dt. Figure 5 shows an example in which, if the objective is to Maximize Production, and MAP is the Minimum acceptable permeability, the MAP to reach may be lower than MAP to operate in a sustainable fashion. For example, in ultrafiltration UF, a possible strategy to enlarge membrane lifetime is to avoid reaching very low permeabilities (usually a limit recommended by the manufacturer); in some operations however, a membrane is "forced" if the objective is to maximize production, in order to respond a certain demand. To visualize that, you have to check Fig 5, since MAP refers to permeability and not the inverse of permeability.

As seen, the proposed methods and systems may allow the optimization of UF operations. Membrane fouling is a constraint when membrane filtration technologies are applied. The disclosed methods allow introducing smartness in the development of strategies, which are usually imposed as a fixed set-point, as constants, and are not adapted to the feed changing conditions.

Thus, the disclosed methods allow a smart monitoring of membrane fouling, reversible and irreversible, based on the user or plant needs: maximize production or economic savings or sustainable operation in terms of fouling. These methods allow the adaptation of setpoints to plant needs or feed changing conditions. The disclosed methods also perform a set of actions for the optimal management of the fouling control strategies: basic operational conditions, hydraulic cleanings and chemical cleanings, in order to anticipate the operation of the membrane and be able to predict intensive maintenance actions, such as chemical cleanings.

The disclosed methods also allow the monitoring of high value KPIs such as energy consumption, chemicals consumption or OPEX.

**Claims**

1. A method for filtration of a liquid by a filtration system, whereby the filtration system is configured with filtration parameters, the filtration parameters comprising at least a filtration time and a filtration flux of the liquid through the filtration system;
   the method comprising

   - determining fouling indicators from the filtration system,
   - comparing at least a fouling indicator with at least a corresponding setpoint;
   - performing an action on the filtration system based on a result from the comparison, whereby the action comprises:

       - modifying the filtration time, and/or
       - modifying the filtration flux, and/or
       - maintaining filtration parameters;

   the method further comprising establishing the setpoints based on a received operational mode, whereby the operational mode is one of expanding the lifecycle of the filtration system or maximizing a total volume of the filtered liquid.

2. The method of claim 1, wherein performing an action on the filtration system is further based on a forecasted energy consumption for each action.

3. The method of any preceding claim, whereby the operational mode is received from at least one of:

       - a user interface, whereby the method comprises modifying the operational mode depending on the received operational mode form the user interface; and/or
       - a controlling system whereby the method comprises detecting, by the controlling system, a need to modify production; and/or

- a provisioning system whereby the method comprises detecting, by the provisioning system, a need to modify a demand for filtration elements.

4. The method of any preceding claim, whereby the setpoints comprise:

   - a minimum acceptable permeability, MAP, and/or
   - an inverse of MAP, and/or
   - a minimum permeability to launch chemical cleaning, MPLCC, and/or
   - an inverse of MPLCC.

5. The method of any preceding claim, wherein the fouling indicators comprise at least one of

   - a total fouling index, TFI, and/or
   - a hydraulically irreversible fouling index, HIFI, and/or
   - a variation of resistance between filtration cycles or during mechanical cleaning, and/or
   - a variation of transmembrane pressure, TMP, and/or
   - a variation of the inverse of permeability, and/or
   - a variation of permeability, and/or
   - a time to reach a setpoint.

6. The method of any preceding claims, wherein a fouling indicator comprises an extrapolation in time of at least one of:

   - a total fouling index, TFI, and/or
   - a hydraulically irreversible fouling index, HIFI, and/or
   - a variation of resistance between filtration cycles or during mechanical cleaning, and/or
   - a variation of transmembrane pressure, TMP, and/or
   - a variation of the inverse of permeability, and/or
   - a variation of permeability.

7. The method of claim 4, wherein the fouling indicators comprise a time for the filtration system to reach any one of MAP or MPLCC or the inverse of MAP and/or the inverse of MPLCC.

8. The method of any preceding claim wherein determining the fouling indicators comprises the on-line measuring fouling indicators performed during a hydraulic cleaning of the filtration system.

9. The method of any preceding claim whereby filtration parameters comprise a chemical cleaning cycle.

10. A filtration system comprising:

    an interface (101) for communication with a processor (102);
    an interface (103) for receiving an operational mode; and
    wherein the filtration system is configured to:

    - determine fouling indicators from the filtration system,
    - compare at least a fouling indicator with at least a corresponding setpoint;
    - perform an action on the filtration system based on a result from the comparison, whereby the action comprises:

      - modifying the filtration time, and/or
      - modifying the filtration flux, and/or
      - maintaining filtration parameters;

    - and establish the setpoints based on a received operational mode, whereby the operational mode is one of expanding the lifecycle of the filtration system or maximizing a total volume of the filtered liquid.

11. The filtration system of claim 10 further comprising the processor (102).

12. The filtration system of any one of claims 10 and 11 whereby the interface (103) for receiving an operational mode comprises a user interface.

**13.** A non-transitory computer-readable medium storing executable instructions that, when executed, cause the processor to operate a method according to any one of claims 1 to 9.

100

104

105

106

101

102

Fig. 1

103

Fig. 2

$$a = \frac{d(\frac{1}{K'})}{dVs} = \text{TFI}$$

$$c = \frac{d(\frac{1}{K'})}{dVs} = \text{HIFI}$$

## Fig. 3

EP 3 789 104 A1

# Fig. 4

EP 3 789 104 A1

Fig. 5

K'

y=ax+b

y=cx+d

MPLCC_3

MAP_3

Specific Volume [m³/m²]

Time to reach MAP

Time to reach MPLCC

**EUROPEAN SEARCH REPORT**

Europäisches
Patentamt
European
Patent Office
Office européen
des brevets

Application Number

EP 19 38 2783

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 2011/180487 A1 (MANIC GILDAS [FR] ET AL) 28 July 2011 (2011-07-28)<br>* paragraphs [0055], [0060], [0062], [0067], [0102], [0110], [0153] - [0057], [0173]; claims 1, 14-16, 18 * | 1,3,5,6, 8-11,13<br>2,4-7,12 | INV.<br>B01D61/22<br>B01D65/02<br>B01D65/10 |
| Y | WO 2011/153625 A2 (PEIRIS RAMILA HISHANTHA [CA]; BUDMAN HECTOR MARCELO [CA] ET AL.) 15 December 2011 (2011-12-15)<br>* page 4 - page 5 * | 2 | |
| Y | US 2005/258098 A1 (VINCENT NATHALIE [FR] ET AL) 24 November 2005 (2005-11-24)<br>* paragraph [0059]; claims 1, 3 * | 4,7 | |
| Y | US 2016/046503 A1 (HOEK ERIC M [US] ET AL) 18 February 2016 (2016-02-18)<br>* paragraphs [0138] - [0149] * | 12 | |
| Y | HASHIMOTO ET AL: "Raw Water Storage as a Simple Means for Controlling Membrane Fouling Caused by Inorganic Foulants in River Water in a Tropical Region",<br>WATER,<br>vol. 11, no. 8,<br>1 January 2019 (2019-01-01), page 1592, XP055670191,<br>CH<br>ISSN: 2073-4441, DOI: 10.3390/w11081592<br>* page 5 * | 5,6 | TECHNICAL FIELDS SEARCHED (IPC)<br><br>B01D<br>C02F |

The present search report has been drawn up for all claims

| Place of search | Date of completion of the search | Examiner |
|---|---|---|
| Munich | 19 February 2020 | Veríssimo, Sónia |

EPO FORM 1503 03.82 (P04C01)

## ANNEX TO THE EUROPEAN SEARCH REPORT
## ON EUROPEAN PATENT APPLICATION NO.

EP 19 38 2783

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2020

| Patent document cited in search report | | Publication date | Patent family member(s) | | Publication date |
|---|---|---|---|---|---|
| US 2011180487 | A1 | 28-07-2011 | NONE | | |
| WO 2011153625 | A2 | 15-12-2011 | US | 2013075331 A1 | 28-03-2013 |
| | | | WO | 2011153625 A2 | 15-12-2011 |
| US 2005258098 | A1 | 24-11-2005 | AT | 272437 T | 15-08-2004 |
| | | | AU | 1616702 A | 24-06-2002 |
| | | | AU | 2002216167 B2 | 21-12-2006 |
| | | | BR | 0115432 A | 06-07-2004 |
| | | | CA | 2431305 A1 | 20-06-2002 |
| | | | CN | 1476348 A | 18-02-2004 |
| | | | DE | 01270376 T1 | 15-04-2004 |
| | | | DE | 60104720 T2 | 04-08-2005 |
| | | | EP | 1343575 A1 | 17-09-2003 |
| | | | ES | 2209672 T1 | 01-07-2004 |
| | | | FR | 2817768 A1 | 14-06-2002 |
| | | | JP | 2004515350 A | 27-05-2004 |
| | | | KR | 20030064815 A | 02-08-2003 |
| | | | PL | 362113 A1 | 18-10-2004 |
| | | | PT | 1343575 E | 29-10-2004 |
| | | | TR | 200301649 T3 | 21-11-2003 |
| | | | US | 2005258098 A1 | 24-11-2005 |
| | | | WO | 0247800 A1 | 20-06-2002 |
| US 2016046503 | A1 | 18-02-2016 | AU | 2015301791 A1 | 30-03-2017 |
| | | | BR | 112017002862 A2 | 30-01-2018 |
| | | | CA | 2957927 A1 | 18-02-2016 |
| | | | CN | 106714942 A | 24-05-2017 |
| | | | EP | 3180108 A1 | 21-06-2017 |
| | | | JP | 2017525563 A | 07-09-2017 |
| | | | KR | 20170086017 A | 25-07-2017 |
| | | | RU | 2017107494 A | 13-09-2018 |
| | | | SG | 11201701097Y A | 30-03-2017 |
| | | | US | 2016046503 A1 | 18-02-2016 |
| | | | WO | 2016025590 A1 | 18-02-2016 |

EPO FORM P0459

For more details about this annex : see Official Journal of the European Patent Office, No. 12/82